# EUROPÄISCHE PATENTSCHRIFT

(11) **EP 0 384 477 B1**
(45) Veröffentlichungstag und Bekanntmachung des Hinweises auf die Patenterteilung: **10.08.1994**
(21) Anmeldenummer: 90103505.5
(22) Anmeldetag: 23.02.1990
(51) Int. Cl.: B21D 7/14, B21D 7/024

(54) **Verfahren und Maschine zum Biegen von Rohren**
Method and machine for bending tubes
Procédé et machine de pliage de tubes

(30) Priorität: 23.02.1989 DE 8902140 U
(43) Veröffentlichungstag der Anmeldung: 29.08.1990
(73) Patentinhaber: RASI MASCHINENBAU UND -HANDELS GMBH, D-75428 Illingen (DE)
(72) Erfinder: Rapp, Heinrich, D-7132 Illingen (DE)
(74) Vertreter: Twelmeier, Ulrich, Dipl.Phys.

(56) Entgegenhaltungen:
- EP-A- 0 338 944
- WO-A-87/01625
- FR-A- 2 085 483
- FR-A- 2 183 019
- US-A- 3 459 018

## Beschreibung

Die Erfindung bezieht sich auf eine Rohrbiegemaschine mit einer Meßeinrichtung zur Bestimmung der Rückfederung und des Durchbiegewinkels am Rohr mit den Merkmalen des Oberbegriffs des Anspruchs 1.

Das Biegen von Rohren erfolgt mittels Rohrbiegemaschinen, welche entsprechend den Verfahrensschritten des Oberbegriffs des Anspruchs 1 arbeiten. Bei den modernen CNC-gesteuerten Biegemaschinen ist die Positionierung des Biegewerkzeuges bis auf 1/100° genau möglich. Diese sehr genaue Positionierung des Biegewerkzeuges wird jedoch durch das Rohrrückfederverhalten zunichte gemacht. Wird ein Rohr in einer Rohrbiegemaschine gebogen und dieses nach Beendigung des Biegevorganges aus der Maschine entnommen, so kommt es zu einer Auffederung des Rohres. Die Auffederung hat zur Folge, dass der vorgegebene Biegewinkel mit dem tatsächlichen Winkel des gebogenen Rohres nicht mehr übereinstimmt. Dieser Sachverhalt soll anhand eines Beispiels näher erläutert werden. Soll z.B. ein 90°-Bogen hergestellt werden, so wird der eine Rohrschenkel um 90° gebogen. Nach Entnahme des so gebogenen Rohres ist der von den beiden Rohrschenkeln eingeschlossene Winkel aufgrund der Auffederung größer als 90°. Um einen gewünschten Sollwinkel α herzustellen, muss das Rohr um die jeweilige Rückfederung überbogen werden.

Es ist bekannt, die Rückfederung von Rohren empirisch zu ermitteln. Hierzu wird das Rohr nach dem Biegevorgang ausserhalb der Biegemaschine mit Hilfe von Handgeräten oder Maschinen nachgemessen und die Rückfederung für diesen Winkel bestimmt.

Nachteilig bei dieser Vorgehensweise ist, dass das Nachmessen des Istwinkels ausserhalb der Rohrbiegemaschine einen erheblichen Zeitaufwand erfordert. Falls der gemessene Istwinkel mit dem Sollbiegewinkel nicht übereinstinmt, was bei unbekanntem Rohrverhalten die Regel ist, besteht ausserhalb der Biegemaschine keine Möglichkeit, das Rohr wirtschaftlich zu korrigieren. Das erste Rohr ist Ausschuss. Dies ist besonders bei gebogenen Rohren für die chemische Industrie, welche aus hochwertigen Werkstoffen bestehen, sehr kostspielig.

Eine Prognose der Rückfederung aufgrund von Erfahrungswerten für Rohre gleicher Art, ist nur bei gleicher Qualität und kleinen Toleranzen innerhalb einer Charge möglich. Sind aber Schwankungen in der Rohrcharge vorhanden, so wird zwangsläufig das Rohrrückfederverhalten falsch vorhergesagt, die Biegeergebnisse entsprechen nicht den Vorgaben.

Da das Auffederverhalten des Rohres von Rohr zu Rohr, ja sogar innerhalb des Rohres unterschiedlich sein kann sind laufende Qualitätskontrollen unerläßlich, um die fehlerhaften Teile auszusondern.

Aus der DE-OS 26 44 030 ist ein Verfahren zur Überwachung der Maßhaltigkeit eines mehrfach gekrümmten Rohres in der Serienfertigung bekannt, welches einer laufenden Qualitätskontrolle entspricht. Dieses Verfahren hat jedoch den Nachteil, dass die Überprüfung der Maßhaltigkeit nicht innerhalb der Rohrbiegemaschine sondern erst nach dieser erfolgt, um so das fehlerhaft gebogene Rohr keiner weiteren Fertigungsstufe und/oder -Station zuzuführen.

Nachteilig bei diesem Verfahren ist wie bereits vorstehend ausgeführt, dass auch hier das fehlerhaft gebogene Rohr unter wirtschaftlichen Gesichtspunkten nicht mehr korrigierbar ist.

Aus der DE-OS 27 04 399 ist eine gattungsgemäße Maschine zum Biegen von Werkstücken mit einer Meßeinrichtung zur Bestimmung des Nachbiegewinkels bekannt. Bei dieser Maschine handelt es sich um solch eine, welche zur Biegung von Blechen verwendet wird. Die Bestimmung des Nachbiegewinkels bzw. der Rückfederung von Blechen erfolgt mittels mehrerer Drehimpulsgaber.

Diese bekannte Meßeinrichtung ist sehr aufwendig gestaltet und empfindlich.

Die Übertragung der aus der DE-OS 27 04 399 bekannten Meßeinrichtung auf Maschinen zum Biegen von Rohren stößt auf große Schwierigkeiten, da die Rohrbiegemaschinen gegenüber den Schwenk-Biegemaschinen andersartig ausgestaltet sind.

Durch die WO 87/01625 ist eine Rohrbiegemaschine bekannt, welche ein Biegewerkzeug, ein Widerlager, eine Spannvorrichtung und eine Meßeinrichtung zur Bestimmung der Rückfederung und des Nachbiegewinkels nach dem Freilassen des nicht gebogenen Rohrschenkels enthält. Ein Rohr wird in die Maschine eingelegt und mittels Spannvorrichtung an dem Biegewerkzeug fixiert. Zur Bestimmung des Nachbiegewinkels wird die anfängliche Ausrichtung des Rohres bestimmt und nach dem Biegen des Rohres um einen Sollwinkel das Biegewerkzeug soweit zurückgedreht, bis der nicht gebogene Rohrschenkel kräftefrei wieder seine anfängliche Ausrichtung eingenommen hat und der zugehörige Winkel, um den das Biegewerkzeug zurückgedreht wurde, gemessen und das Rohr um den Winkel nachgebogen wird.

Bei der bekannten Rohrbiegemaschine weist die Meßeinrichtung zwei in Abstand zueinander in einer Ebene angeordnete Fühler auf, die mit Sensoren versehen sind. Kommt nur ein Fühler in Kontakt mit dem gebogenen Rohr, so wird das Rohr nachgebogen. Der Prozeß wird solange wiederholt, bis beide Fühler tangential an der Mantelfläche des freien Rohrschenkels anliegen.

Nachteilig bei dieser Ausführungsform ist, dass eine direkte Messung des Nachbiegewinkels nicht möglich ist.

Hiervon ausgehend liegt der Erfindung die Aufgabe zugrunde, die bekannte Rohrbiegemaschine zum Biegen von Rohren, welche unter wirtschaftlichen Gesichtspunkten einen geforderten Biegewinkel gewährleistet, so weiterzubilden, dass diese mit einer robusten, in ihrem Aufbau einfachen Meßeinrichtung zur Bestimmung des Nachbiegewinkels verwirklicht werden kann.

Der vorliegenden Erfindung liegt die Aufgabe zugrunde, eine Maschine zum Biegen von Rohren zu schaffen mit einer robusten, in ihrem Aufbau einfachen Meßeinrichtung zur Bestimmung des Nachbiegewinkels.

Diese Aufgabe wird gelöst durch eine Rohrbiegemaschine mit den im Anspruch 1 angegebenen Merkmalen. Vorteilhafte Weiterbildungen sind Gegenstand der Unteransprüche.

Bei der Erfindung wird nach dem Fixieren des Rohres dessen anfängliche Ausrichtung bestimmt und nach dem Biegen das Biegewerkzeug zurückgedreht, bis der nicht gebogene Rohrschenkel kräftefrei wieder seine anfängliche Ausrichtung eingenommen hat. Der zugehörige Winkel um den das Biegewerkzeug zurückgedreht wurde, wird gemessen und das Rohr um den Winkel nachgebogen. Dieses Verfahren hat den großen Vorteil, dass die Bestimmung des Winkels γ in einem kräftefreien Zustand des nicht gebogenen Rohrschenkels erfolgt. Hierdurch wird eine sichere und genaue Bestimmung des Nachbiegewinkels erfolgen.

Ein weiterer Vorteil ist darin zu sehen, dass die verwendete Rohrbiegemaschine nicht umgerüstet werden braucht. Hier wird bereits die vorhandene Meßmimik, welche zur Steuerung der Rohrbiegemaschine verwendet, genutzt um das Biegewerkzeug zurückzudrehen und daraus den zugehörigen Winkel zu bestimmen.

Die Rohrbiegemaschine gemäß Anspruch 1 zeichnet sich durch eine Meßeinrichtung aus, die einen einfachen und robusten Aufbau aufweist. Sie ist daher unempfindlich gegenüber dem rauhen Einsatz im Betrieb. Dies ist besonders bei der Herstellung von gebogenen Rohren von Bedeutung, da das Einlegen und die Entnahme des Rohres aus der Rohrbiegemaschine vorwiegend manuell vorgenommen wird.

Vorteilhafterweise ist die Meßeinrichtung mit einem Zeiger ausgebildet, der länger als der Tastarm ist. Hierdurch wird eine hohe Empfindlichkeit der Messung ermöglicht. Die Messung ist eine Kompensationsmessung bei der das Biegewerkzeug solange zurückgedreht wird, bis der nicht gebogene Rohrschenkel kräftefrei wieder seine anfängliche Ausrichtung eingenommen hat und der Zeiger seine Ausgangsposition ebenfalls eingenommen hat.

Vorteilhafterweise sind der Tastarm und der Zeiger der Meßeinrichtung ein Teil, wodurch eine wirtschaftlich vorteilhafte Ausgestaltung der Maschine erzielt wird, da die Herstellung des einteiligen Tastarms und des Zeigers in einem einzigen Herstellvorgang vorgenommen werden kann.

Ein weiterer Vorteil liegt daran, dass der Tastarm und der Zeiger gegeneinander nicht ausgerichtet werden müssen und auch keine Nachausrichtung notwendig ist. Die Meßeinrichtung weist vorteilhafterweise an dem Tastarm einen zweiten Arm auf, welcher parallel zum Zeiger ist. Hierdurch wird eine besonders zuverlässige Messung des Nachbiegewinkels γ erzielt. Die rechtwinklige Anordnung des Zeigers und des Tastarms hat den Vorteil, dass die Auslenkung des Zeigers dem Auffedern des nicht gebogenen Rohrschenkels entspricht.

Die Weiterbildung der Rohrbiegemaschine nach Anspruch 5 hat den Vorteil, dass die Meßeinrichtung an der Maschine sehr kompakt ausgebildet ist, da der Zeiger parallel zur Anschlagfläche des Widerlagers und parallel zum zu biegenden Rohr ist.

Vorteilhafterweise sind an den beiden Enden des zweiten Arms Tastelemente angebracht, wodurch ein Anliegen über der gesamten Länge des zweiten Armes an dem Rohr verhindert wird. Durch die Tastelemente, bei denen es sich um zylinderförmige handeln kann, werden etwaige Unebenheiten des Rohres, welche zu Meßergebnisverfälschungen führen können, ausgeschlossen. Dies ist eine Folge dessen, dass die Tastelemente an der Mantelfläche des Rohres theoretisch nur an einem Punkt anliegen.

Die Weiterbildung nach Anspruch 7 hat den Vorteil, dass die Meßeinrichtung weiter vereinfacht wird. Es bedarf keines komplizierten Herstellungsweges des Armes mit dem Tastelement. Auch hier besteht zwischen den Tastelementen und dem Rohr nur eine Punktberührung.

Die Weiterbildung nach Anspruch 8 hat den Vorteil, dass die Meßeinrichtung nur während der Messung an das Rohr herangeführt wird, so dass beim Wechsel des Rohres oder während des Biegevorgangs die Meßeinrichtung vor Beschädigungen geschützt ist.

Vorteilhafterweise ist die Meßeinrichtung relativ zum Widerlager justierbar, so dass ein unbeabsichtigtes Heranführen der Meßeinrichtung an das Rohr verhindert wird.

Die Weiterbildung nach Anspruch 10 hat den Vorteil, dass ein Positionssensor vorgesehen ist, mit dem die kräftefreie anfängliche Ausrichtung des nicht gebogenen Rohrschenkels bestimmt wird. Dieser Positionssensor ist vorteilhafterweise in der Nähe des freien Endes des Zeigers angeordnet, wodurch eine hohe Empfindlichkeit erzielt wird. Das zu biegende Rohr wird in eine Rohrbiegemaschine eingelegt und in einer Spannvorrichtung an einem Biegewerkzeug fixiert. An den nicht zu biegenden Rohrschenkel wird die Meßeinrichtung herangefahren und die Tastelemente zur Anlage an das Rohr gebracht. Die Lage des fixierten Rohres wird als anfängliche Ausrichtung durch die Meßeinrichtung bestimmt und als Referenzlage angesehen. Ist die anfängliche Ausrichtung bestimmt, so wird die Meßeinrichtung von dem Rohrschenkel zurückgefahren und das Widerlager an das Rohr herangefahren. Anschließend erfolgt ein Biegen des Rohres um den Sollwinkel α . Ist der Biegevorgang. d.h. das Biegen des Rohres um den Sollwinkel beendet, so wird das Widerlager zurückgefahren. Der nicht gebogene Rohrschenkel federt auf, wobei das Auffedern z.B. durch einen im Rohr vorhandenen Dorn oder eine Spanzange behindert werden kann. Die Meßeinrichtung wird an den nicht gebogenen Rohrschenkel herangefahren und die Tastelemente zur Anlage an das Rohr gebracht. Der Zeiger ist entsprechend der Auffederung des Rohres ausgelenkt und weicht von der anfänglichen Ausrichtung des Rohres aus. Der Positionssensor gibt ein Signal an einen Drehgeber ab, der mit dem Biegeantrieb elektrische verbunden ist. Der Drehgeber steuert den Biegeantrieb an und das Biegewerkzeug wird zurückgefahren. Dies geschieht solange, bis der nicht gebogene Rohrschenkel seine kräftefreie anfängliche Ausrichtung eingenommen hat. In dieser Stellung hat auch der Zeiger seine Referenzlage erreicht und die Abgabe eines Signals an den Drehgeber wird beendet. Aus der aktuellen Stellung des Biegewerkzeuges wird der zugehörige Winkel γ bestimmt. Nach der Bestimmung des Winkels γ wird die Meßeinrichtung von dem Rohr zurückgefahren und das Widerlager mit seiner Anschlagsfläche an den nicht zu biegenden Rohrschenkel zur Anlage gebracht. Das Rohr wird nunmehr um den Winkel γ nachgebogen.

Weitere Merkmale und Vorteile ergeben sich aus der nachfolgenden Beschreibung eines bevorzugten Ausführungsbeispiels.

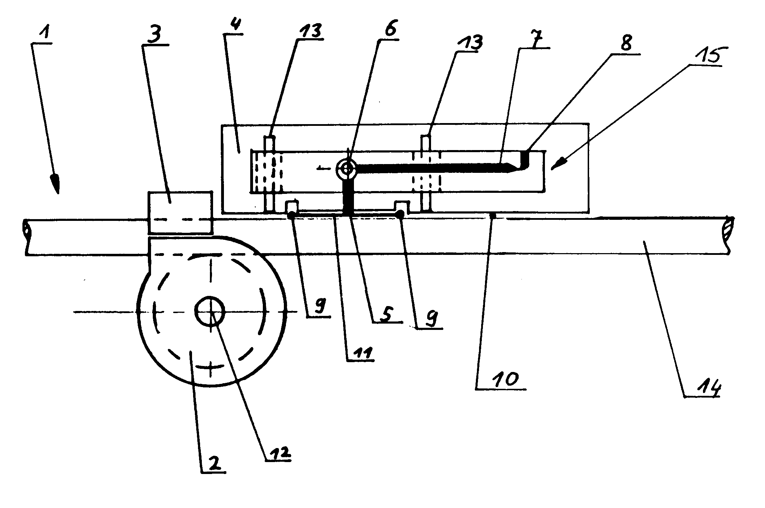

- Figur 1: zeigt schematisch den Aufbau einer Maschine zum Biegen von Rohren mit einer Meßeinrichtung zur Bestimmung des Nachbiegewinkels.

In der Figur 1 sind nur die wesentlichen Teile der Maschine und der Meßeinrichtung dargestellt. Ein Rohr 1 wird durch das Biegewerkzeug 2 um die Biegeachse 12 gebogen. Das Rohr wird zum einen am Werkzeug 2 mittels der Spannvorrichtung 3 und zum anderen durch das Widerlager 4 festgehalten. Während des Biegevorgangs liegt das Widerlager 4 mit seiner Anschlagfläche 10 an der Mantelfläche des Rohres 1 an.

Die Meßeinrichtung ist auf dem Widerlager 4 ortsverschieblich angeordnet. Eine Verschiebung der Meßeinrichtung ist auf den Führungen 13 möglich.

Die in der Figur 1 dargestellte Position der Meßeinrichtung entspricht der kräftefreien anfänglichen Ausrichtung des Rohres 1. An dem nicht zu biegenden kräftefreien Rohrschenkel 14 liegen die Tastelemente 9 an. Die Tastelemente 9 sind an den beiden Enden des zweiten Armes 11 angebracht. Der zweite Arm 11 ist an dem der Achse 6 gegenüberliegenden Ende des Tastarmes 5 rechtwinklig sowie symmetrisch zur Drehachse 6 angeordnet. Der Tastarm 5 und der Zeiger 7 bilden einen rechten Winkel. Der Zeiger 7 sowie der zweite Arm 11 sind parallel zueinander angeordnet.

In der Nähe des freien Endes des Zeigers 7 ist ein Positionssensor 8 angeordnet, der auf die Lage des Zeigers 7 anspricht. Ist der Zeiger 7 aus seiner Lage, welche durch die anfängliche Ausrichtung des Rohres bestimmt ist ausgelenkt, so gibt der Positionssensor 8 ein Signal an einen Drehgeber, welches solange anhält, bis der Zeiger 7 seine ursprüngliche Lage wieder eingenommen hat.

Nicht dargestellt ist die Verbindung des Positionssensors 8 mit dem Drehgeber. Der Drehgeber ist mit dem Drehantrieb der Rohrbiegemaschine verbunden. Er weist einen ersten und einen zweiten Eingang auf. Der erste Eingang ist zur Eingabe des Sollwinkels α vorgesehen um den das Rohr gebogen werden soll. Der zweite Eingang des Drehgebers ist mit einem Ausgang des Positionssensors verbunden der ein Signal an den Drehgeber abgibt, bis der nicht gebogene Rohrschenkel seine kräftefreie anfängliche Ausrichtung eingenommen hat. Der Drehgeber ist vorteilhafterweise in einer Steuereinheit der Rohrbiegemaschine angeordnet.

Bei dem Positionssensor zur Bestimmung der kräftefreien anfänglichen Ausrichtung des Rohres kann es sich z.B. um einen Näherungssensor handeln. Eine weitere Möglichkeit zur Ausgestaltung des Positionssensors 8 besteht darin, dass man eine Lichtschranke verwendet. Desweiteren ist es möglich eine Justierschraube als Positionssensor 8 zu verwenden.

## Patentansprüche

1. Rohrbiegemaschine umfassend ein Biegewerkzeug, ein Widerlager, eine Spannvorrichtung und eine Meßeinrichtung zur Bestimmung der Rückfederung und des Nachbiegewinkels nach dem Freilassen des nichtgebogenen Rohrschenkels (14), wobei ein Rohr in die Maschine eingelegt wird, das Rohr mittels Spannvorrichtung (3) an dem Biegewerkzeug (2) fixiert, dessen anfängliche Ausrichtung bestimmt und nach dem Biegen des Rohres um einen Sollwinkel α das Biegewerkzeug (2) soweit zurück gedreht wird bis der nichtgebogene Rohrschenkel (14) kräftefrei wieder seine anfängliche Ausrichtung eingenommen hat und der zugehörige Winkel γ , um den das Biegewerkzeug (2) zurückgedreht wurde, gemessen, und das Rohr um den Winkel γ nachgebogen wird,
**dadurch gekennzeichnet**, daß die Meßeinrichtung einen schwenkbaren Tastarm (5), welcher zur Anlage an den nicht-gebogenen Rohrschenkel (14) gebracht wird, und einen drehfest mit dem Tastarm (5) verbundenen Zeiger (7) aufweist, welche drehbar um eine zu der Biegeachse (17) parallele Achse (6) sind.

2. Rohrbiegemaschine nach Anspruch 1, **dadurch gekennzeichnet**, daß der Zeiger (7) länger als der Tastarm (5) ist.

3. Rohrbiegemaschine nach Anspruch 1 oder 2, **dadurch** **gekennzeichnet**, daß der Tastarm (5) und der Zeiger (7) ein Teil bilden.

4. Rohrbiegemaschine nach einem der Ansprüche 1 bis 3, **dadurch gekennzeichnet**, daß der Tastarm (5) wenigstens zwei in einer Ebene und parallel zur Biegeachse (12) liegende Tastelemente (9) aufweist.

5. Rohrbiegemaschine nach Anspruch 4, **dadurch gekennzeichnet**, daß der Tastarm (5) und der Zeiger (7) einen rechten Winkel bilden und an dem Tastarm (5) parallel zum Zeiger (7) und symmetrisch zur Achse (6) ein zweiter Arm (11) angeordnet ist, an dessen beiden Enden Tastelemente (9) ausgebildet sind.

6. Rohrbiegemaschine nach Anspruch 5, **dadurch gekennzeichnet**, daß die an den beiden Enden des zweiten Armes (11) angeordneten Tastelmente (9) zylinderförmig sind.

7. Rohrbiegemaschine nach Anspruch 5, **dadurch gekennzeichnet**, daß die beiden Enden des zweiten Armes (11) von der Anschlagfläche (10) weggebogen sind, und eine gedachte Verbindungslinie zwischen den umgebogenen Enden parallel zum Zeiger (7) ist.

8. Rohrbiegemaschine nach einem der vorstehenden Ansprüche 1 bis 7, **dadurch gekennzeichnet**, daß die Meßeinrichtung (15) auf dem Widerlager (4) der Maschine ortsveränderliche angeordnet ist.

9. Rohrbiegemaschine nach Anspruch 8, **dadurch gekennzeichnet**, daß die Meßeinrichtung (15) in ihrer Position relativ zum Widerlager (4) justierbar ist.

10. Rohrbiegemaschine nach einem der vorstehenden Ansrpüche 1 bis 9, **dadurch gekennzeichnet**, daß in der Nähe des freien Endes des Zeigers (7) ein Positionssensor (8) zur Bestimmung der kräftefreien Lage des nicht zu biegenden Rohrschenkels angeordnet ist.

11. Rohrbiegemaschine nach einem der vorstehenden Ansprüche 1 bis 10, **dadurch gekennzeichnet,** daß ein Drehantrieb der Rohrrichtmaschine mit einem Drehgeber verbunden ist, der einen ersten und einen zweiten Eingang aufweist, wobei der erste Eingang zur Sollwinkeleingabe vorgesehen und der zweite Eingang mit einem Ausgang des Positionssensor (8) verbunden ist, der ein Signal an den Drehgeber abgibt, bis der nichtgebogene Rohrschenkel (14) seine kräftefreie anfängliche Ausrichtung eingenommen hat.

## Claims

1. A pipe bending machine comprising a bending tool, an abutment, clamping means and a measuring instrument for determining the springback and the rebending angle when the unbent pipe leg (14) is free from forces, wherein a pipe is inserted into the machine, the pipe is fixed to the bending tool (2) by the clamping means (3), the initial direction of the bending tool is determined, the pipe is bent through a specified angle α and the bending tool (2) is subsequently turned back until the unbent pipe leg (14) when it is free from forces has re-assumed its initial direction, the associated angle γ about through which the bending tool (2) has been turned back is measured and the pipe is rebent through the angle γ,
characterized in that the measuring instrument comprises a pivoted feeler arm (5), which is engaged with the unbent pipe leg (14), and a pointer (7), which is non-rotatably connected to the feeler arm (5), and said feeler arm and pointer are rotatable about an axis (6), which is parallel to the bending axis (12).

2. A pipe bending machine according to claim 1, characterized in that the pointer (7) is longer than the feeler arm (5).

3. A pipe bending machine according to claim 1 or 2, characterized in that the feeler arm (5) and the pointer (7) constitute one member.

4. A pipe bending machine according to any of claims 1 to 3, characterized in that the feeler arm (5) comprises at least two feeler elements (9), which lie in one plane and are parallel to the bending axis (12).

5. A pipe bending machine according to claim 4, characterized in that the feeler arm (5) and the pointer (7) include a right angle and the feeler arm (5) is provided with a second arm (11), which is parallel to the pointer (7) and symmetrical to the axis (6) and is formed with feeler elements (9) at both ends.

6. A pipe bending machine according to claim 5, characterized in that the feeler elements (9) provided at both ends of the second arm (11) are cylindrical.

7. A pipe bending machine according to claim 5, characterized in that the two ends of the second arm (11) are bent away from the engaging surface (10) and an imaginary line connecting the bent ends is parallel to the pointer (7).

8. A pipe bending machine according to any of the preceding claims 1 to 7, characterized in that the measuring instrument (5) is movably mounted on the abutment (4) of the machine.

9. A pipe bending machine according to claim 8, characterized in that the position of the measuring instrument (15) is adjustable as regards ist position relative to the abutment (4).

10. A pipe bending machine according to any of the preceding claims 1 to 9, characterized in that a position sensor (8) for detecting the position of the unbent pipe leg when it is free from forces is provided near the free end of the pointer (7).

11. A pipe bending machine according to any of the preceding claims 1 to 10, characterized in that a rotary drive of the pipe bending machine is connected to an angle encoder, which has first and second inputs, the first input is adapted to receive specified angle data and the second input is connected to an output of the position sensor (8), which delivers a signal to the angle encoder until the unbent pipe (14) which is free from forces has assumed its initial direction.

## Revendications

1. Machine à cintrer les tubes comprenant un outil de cintrage, une butée, un dispositif de serrage et un dispositif de mesure servant à déterminer la reprise de forme élastique et l'angle de cintrage après le relâchement de la branche non cintrée (14) du tube, dans laquelle on net un tube en place dans la machine, on fixe le tube, au moyen d'un dispositif de serrage (3), à l'outil de cintrage (2) dont l'orientation initiale est déterminée et, après que le tube a été cintré d'un angle de consigne α, on fait revenir l'outil de cintrage (2) en sens inverse jusqu'à ce que la branche non cintrée (14) du tube, libérée de l'action des forces, ait repris son orientation initiale, et on mesure l'angle γ dont l'outil de cintrage (2) a été tourné en sens inverse, puis on cintre le tube une nouvelle fois de l'angle γ, caractérisée en ce que le dispositif de mesure comprend un bras palpeur pivotant (5) qui est mis en appui contre la branche non cintrée (14) du tube et une aiguille (7) reliée solidairement en rotation au bras palpeur (5), ces deux éléments pouvant tourner autour d'un axe (6) parallèle à l'axe de cintrage (17).

2. Machine à cintrer les tubes selon la revendication 1, caractérisée en ce que l'aiguille (7) est plus longue que le bras palpeur (5).

3. Machine à cintrer les tubes selon la revendication 1 ou 2, caractérisée en ce que le bras palpeur (5) et l'aiguille (7) forment une seule pièce.

4. Machine à cintrer les tubes selon une des revendications 1 à 3, caractérisée en ce que le bras palpeur (5) présente au moins deux éléments palpeurs (9) situés dans un même plan et parallèlement à l'axe de centrage (12).

5. Machine à cintrer les tubes selon la revendication 4, caractérisée en ce que le bras palpeur (5) et l'aiguille (7) forment un angle droit et que, sur le bras palpeur (5), est prévu un deuxième bras (11), disposé parallèlement à l'aiguille (7) et symétriquement par rapport à l'axe (6), et aux deux extrémités duquel sont formés des éléments palpeurs (9).

6. Machine à cintrer les tubes selon la revendication 5, caractérisé en ce que les éléments palpeurs (5) disposés aux deux extrémités du deuxième bras (11) sont de forme cylindrique.

7. Machine à cintrer les tubes selon la revendication 5, caractérisée en ce que les deux extrémités du deuxième bras (11) sont incurvées dans le sens qui s'éloigne de la surface de butée (10) et qu'une ligne imaginaire joignant les extrémités incurvées est parallèle à l'aiguille.

8. Machine à cintrer les tubes selon une des revendications 1 à 7, caractérisée en ce que le dispositif de mesure (15) est agencé en position variable sur la butée (4) de la machine.

9. Machine à cintrer les tubes selon la revendication 8, caractérisée en ce que le dispositif de mesure (15) est réglable en position par rapport à la butée (4).

10. Machine à cintrer les tubes selon une des revendications 1 à 9, caractérisée en ce qu'il est prévu un capteur de position (8), disposé à proximité de l'extrémité libre de l'aiguille (7) pour déterminer la position de la branche du tube qui n'est pas à cintrer à l'état libéré de l'action des forces.

11. Machine à cintrer les tubes selon une des revendications précédentes 1 à 10, caractérisée en ce qu'un mécanisme d'entraînement en rotation de la machine à cintrer les tubes est relié à un capteur de rotation qui comprend une première entrée et une deuxième entrée, la première entrée étant prévue pour l'introduction de l'angle de consigne et la deuxième entrée étant reliée à une sortie du capteur de position (8) qui transmet un signal au capteur de rotation jusqu'à ce que la branche non cintrée (14) du tube ait pris son orientation initiale libérée de l'action des forces.
